# EUROPEAN PATENT APPLICATION

(11) **EP 4 570 479 A1**
(43) Date of publication of application: **18.06.2025**
(21) Application number: 23838893.8
(22) Date of filing: 10.07.2023
(51) Int. Cl.: B29C 64/35, B29C 64/357, B65B 1/32, B65B 1/06

(54) **WASTE DISCHARGING DEVICE FOR 3D PRINTER, AND 3D PRINTER**

(30) Priority: 14.07.2022 CN 202221825440 U
(71) Applicant: Shanghai Lunkuo Technology Co., Ltd., Shanghai 200120 (CN)
(72) Inventor: DONG, Qun, Shanghai 200120 (CN)
(74) Representative: Grünecker Patent- und Rechtsanwälte PartG mbB
(86) International application number: PCT/CN2023/106540
(87) International publication number: WO 2024/012401

(57) **Abstract**

A waste material discharge device comprises a material bin, a trigger connecting rod, and a material blocking plate, wherein a cavity is formed in the material bin, a material inlet and a material outlet are formed in the material bin, the material inlet, the cavity, and the material outlet are sequentially communicated to form a material discharge channel, the material inlet is used for the entry of waste materials of a 3D printer, and the material outlet is configured to communicate with an outside of the 3D printer to enable the waste materials to be discharged to the outside of the 3D printer along the material discharge channel. A first end of the trigger connecting rod rotates under the push of a printing head, when the trigger connecting rod rotates, a second end thereof pushes the material blocking plate in the material bin to rotate.

## Description

### CROSS-REFERENCE TO RELATED APPLICATION

The present application claims priority to Chinese Patent Application No. 202221825440.7, filed on July 14, 2022, the content of which is incorporated herein by reference in the entirety.

### TECHNICAL FIELD

The present disclosure relates to the field of three-dimensional (3D) printing technologies, and in particular to a waste material discharge device for a 3D printer and the 3D printer.

### BACKGROUND

A 3D printer is a printing device for forming objects by layer-by-layer printing using bondable materials such as powdered metal or plastic as printing materials based on digital model files. After different types or colors of printing materials are replaced and before formal printing, a 3D printer generally needs to eject filamentous waste materials (hereinafter referred to as waste materials) to ensure that the previous printing materials are flushed clean, thereby avoiding material mixing or color mixing during formal printing.

Existing 3D printers typically print waste materials on a print table, resulting in the decreased area of a printing region of the print table.

### SUMMARY

Embodiments of the present disclosure provide a waste material discharge device for a 3D printer and the 3D printer to discharge waste materials out of the 3D printer, thereby solving a problem that a print table is occupied by the waste materials.

According to a first aspect of the present disclosure, provided is a waste material discharge device for a 3D printer, including: a material bin, a trigger connecting rod, and a material blocking plate. A cavity is formed in the material bin, a material inlet and a material outlet are formed in the material bin, the material inlet, the cavity, and the material outlet are sequentially communicated to form a material discharge channel, the material inlet is used for the entry of waste materials of a 3D printer, and the material outlet is configured to communicate with an outside of the 3D printer to enable the waste materials to be discharged to the outside of the 3D printer along the material discharge channel. The trigger connecting rod is pivotably arranged at the material inlet around a first rotating shaft and includes a first end extending out of the material inlet and a second end opposite to the first end, and the second end is located in the material bin. A material blocking plate may be pivotably arranged in the material bin around a second rotating shaft and includes a first end, which may be pivotably connected to the second rotating shaft, and a second end opposite to the first end.

Moreover, the trigger connecting rod is configured such that when a printing head of the 3D printer pushes the first end of the trigger connecting rod to enable the trigger connecting rod to pivot around the first rotating shaft, the second end of the trigger connecting rod moves towards the material blocking plate to push the material blocking plate to pivot around the second rotating shaft, and when the printing head of the 3D printer pushes the first end of the trigger connecting rod to a preset position, the second end of the trigger connecting rod pushes the material blocking plate to pivot around the second rotating shaft to be in an operating state, and in the operating state, the second end of the material blocking plate abuts against an inner wall surface of the material bin to block the waste materials from a nozzle of the 3D printer from falling.

In one possible embodiment, in the operating state, a height of the second end of the material blocking plate is lower than a height of the first end of the material blocking plate.

In one possible embodiment, in the operating state, the printing head of the 3D printer is located above the material bin, and the nozzle of the printing head is aligned with the material inlet.

In one possible embodiment, the trigger connecting rod includes a first segment extending from the first rotating shaft to the first end of the trigger connecting rod and a second segment extending from the first rotating shaft to the second end of the trigger connecting rod.

In one possible embodiment, the first segment and the second segment of the trigger connecting rod form an included angle, such that the first segment is inclined towards the material inlet when the trigger connecting rod is not pushed by the printing head and thus in a free state, or the first segment and the second segment of the trigger connecting rod are at 180 degrees to each other.

In one possible embodiment, the second end of the trigger connecting rod is provided with a protrusion portion protruding towards the material blocking plate.

In one possible embodiment, an axis of the first rotating shaft is parallel to an axis of the second rotating shaft, or the axis of the first rotating shaft is perpendicular to the axis of the second rotating shaft.

In one possible embodiment, the material bin includes a first material cylinder and a second material cylinder, wherein a first end of the first material cylinder is the material inlet, a second end of the first material cylinder is connected to a first end of the second material cylinder, a second end of the second material cylinder is the material outlet, and the first end to the second end of the first material cylinder and the first end to the second end of the second material cylinder both extend from above to below.

In one possible embodiment, a central axis of the first material cylinder extends in a vertical direction; and/or, a central axis of the second material cylinder extends obliquely downward, such that a bottom wall of the second material cylinder is inclined relative to the vertical direction.

In one possible embodiment, the material bin is made of self-lubricating plastics, or an anti-sticking coating is arranged on the inner wall surface of the material bin. According to a second aspect of the present disclosure, provided is a 3D printer, including: the waste material discharge device for a 3D printer according to the first aspect of the present disclosure.

According to one or more embodiments of the present disclosure, the waste material discharge device is capable of discharging the waste materials out of the 3D printer to prevent the waste materials from occupying a print table, thereby solving a problem of the decreased area of a printing region as the print table is occupied. At the same time, the waste material discharge device is further provided with the trigger connecting rod and the material blocking plate, such that the material blocking plate in the operating state can block the waste materials from falling. In this case, the waste materials first fall on the material blocking plate, a part of the waste materials can gather into lumps, and thus the loosening degree of the waste materials is reduced, such that the volume of the waste materials is reduced, and therefore, such waste materials are easily collected for disposal after being discharged from the material outlet out of the 3D printer. These and other aspects of the present disclosure will become clear on the basis of the embodiments described hereinafter, and will be illustrated with reference to the embodiments described hereinafter.

### BRIEF DESCRIPTION OF THE DRAWINGS

In the accompanying drawings, unless otherwise specified, the same reference numerals across multiple accompanying drawings indicate the same or similar components or elements. The accompanying drawings are not necessarily drawn to scale. It should be understood that the accompanying drawings depict only some embodiments of the present disclosure and are therefore not to be considered as limiting of the scope of the present disclosure.
FIG. 1 shows a schematic structural diagram of a waste material discharge device according to an embodiment of the present disclosure;
FIG. 2 shows a schematic diagram of a material blocking plate in a free state in a waste material discharge device according to an embodiment of the present disclosure;
FIG. 3 shows a cross-sectional diagram of a material blocking plate in a free state in a waste material discharge device according to an embodiment of the present disclosure;
FIG. 4 shows a schematic diagram of a material blocking plate in an operating state in a waste material discharge device according to an embodiment of the present disclosure;
FIG. 5 shows a cross-sectional diagram of a material blocking plate in an operating state in a waste material discharge device according to an embodiment of the present disclosure; and
FIG. 6 shows a schematic diagram of an operation process of a waste material discharge device according to an embodiment of the present disclosure.

### DETAILED DESCRIPTION

In the following, only certain exemplary embodiments are briefly described. As will be recognized by those skilled in the art, the accompanying drawings and descriptions are to be construed as illustrative in nature but not restrictive.

Existing 3D printers usually need to replace the color or material of printing materials on the printing head, such that the printed three-dimensional object may consist of multiple materials and/or multiple colors, thereby enriching the interest of printing. To avoid material mixing or color mixing between the replaced printing materials and the previous printing materials remaining in the printing head, the 3D printer generally needs to eject waste materials after different types or colors of printing materials are replaced and before formal printing. In the existing examples, the printing head of the 3D printer usually directly ejects waste materials onto the print table of the 3D printer. In this case, the waste materials may occupy the printing region of the print table, resulting in the decreased area of the printing region of the print table.

In response to the above problem, embodiments of the present disclosure provide a waste material discharge device for a 3D printer and the 3D printer, and are described below with reference to the accompanying drawings in the embodiments of the present disclosure. It should be noted that the terms used in detailed description of the present disclosure are merely for the purpose of interpreting particular embodiments of the present disclosure and are not intended to limit the present disclosure.

In this embodiment, provided is a 3D printer, which is also known as a three-dimensional printer and constructs a three-dimensional object by layer-by-layer printing. The 3D printer includes a printing head and a print table, wherein the printing head is provided with a nozzle and is configured to be movable relative to the print table. The print table defines a printing region, and printing materials ejected from the nozzle of the printing head are deposited layer by layer on the printing region defined by the print table, thereby printing a three-dimensional object.

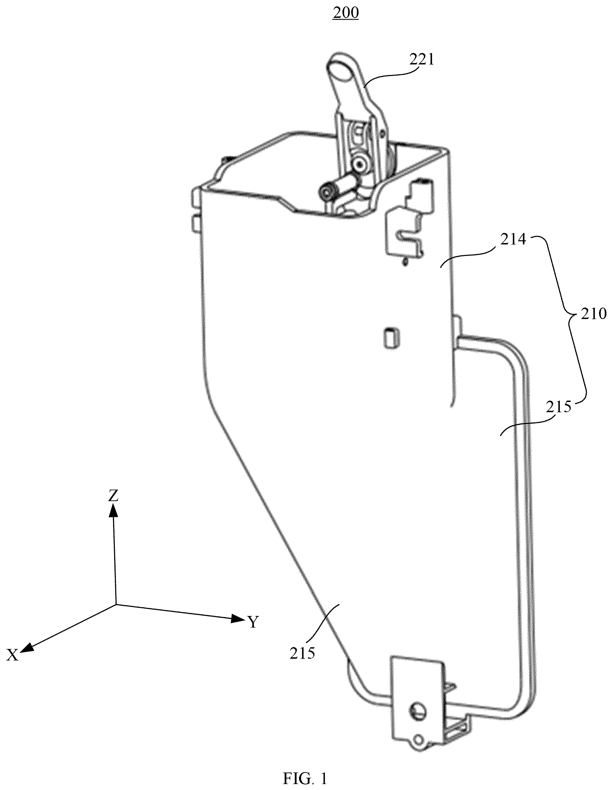

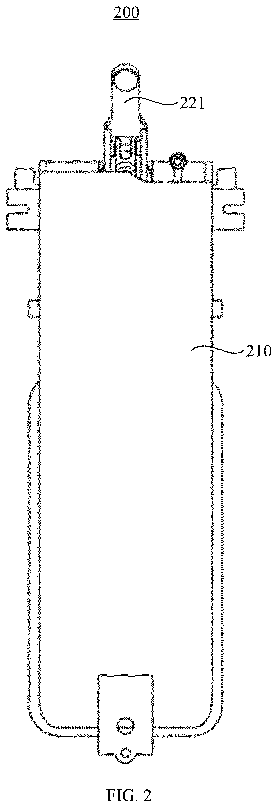

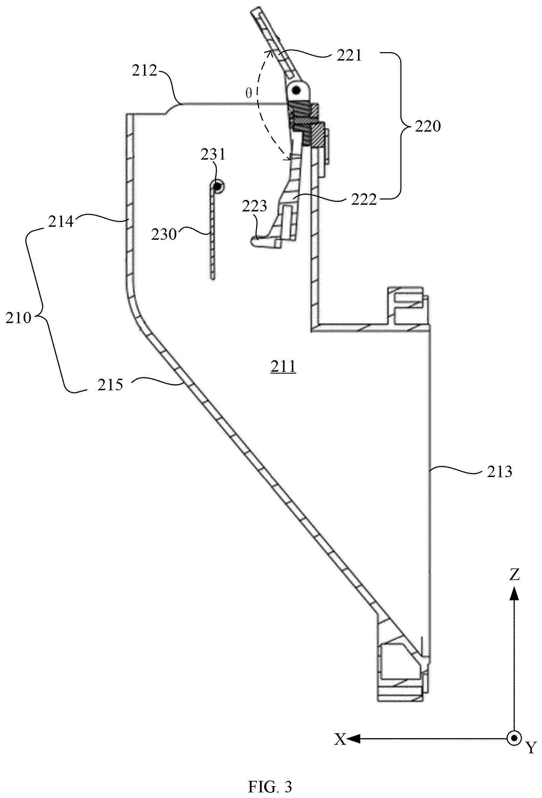

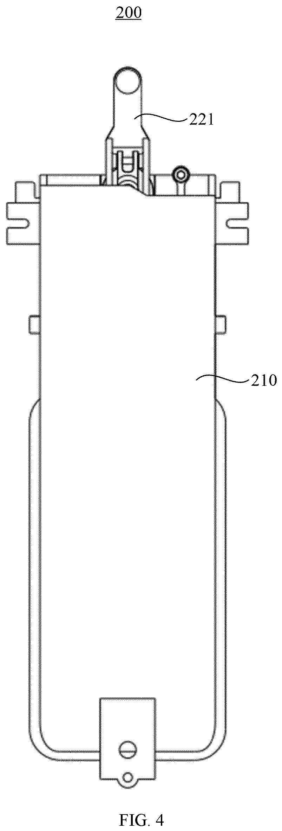

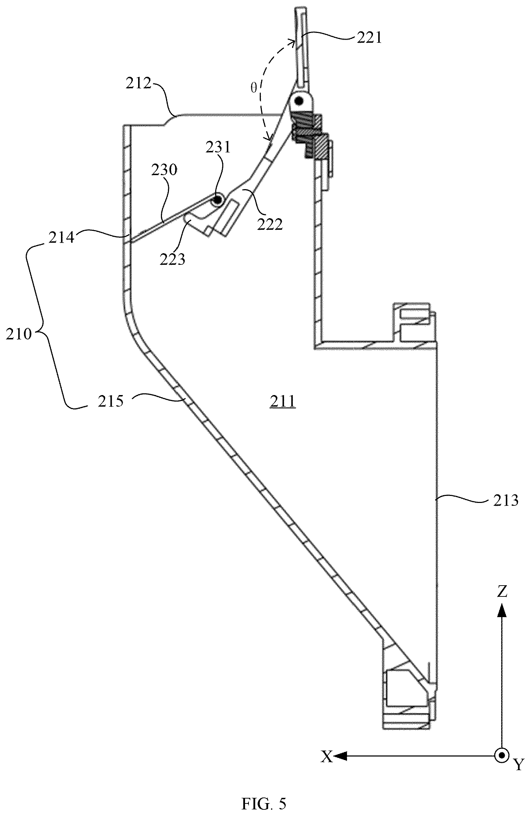

FIG. 1 schematically shows a schematic structural diagram of a waste material discharge device of an embodiment of the present disclosure. FIG. 2 schematically shows a schematic diagram of a material blocking plate in a free state in a waste material discharge device according to an embodiment of the present disclosure. FIG. 3 schematically shows a cross-sectional diagram of a material blocking plate in a free state in a waste material discharge device according to an embodiment of the present disclosure. FIG. 4 schematically shows a schematic diagram of a material blocking plate in an operating state in a waste material discharge device according to an embodiment of the present disclosure. FIG. 5 schematically shows a cross-sectional diagram of a material blocking plate in an operating state in a waste material discharge device according to an embodiment of the present disclosure.

Referring to FIGs. 1 to 5, a waste material discharge device 200 is used in a 3D printer to discharge waste materials ejected from a nozzle 110 of the 3D printer out of the 3D printer. It should be noted that, for ease of description, in each of the accompanying drawings of the embodiments of the present disclosure, directions of an X axis, a Y axis, and a Z axis represent a width direction, a length direction, and a height direction of the waste material discharge device 200, respectively.

The waste material discharge device 200 may include a material bin 210. A cavity 211 is formed in the material bin 210, and a material inlet 212 and a material outlet 213 are formed in the material bin 210. The material inlet 212, the cavity 211, and the material outlet 213 are sequentially communicated to form a material discharge channel. The material inlet 212 is used for the entry of waste materials 300 of the 3D printer, and the material outlet 213 is configured to communicate with an outside of the 3D printer to enable the waste materials 300 to be discharged to the outside of the 3D printer along the material discharge channel.

The waste material discharge device 200 may include a trigger connecting rod 220 and a material blocking plate 230. The trigger connecting rod 220 is pivotably arranged at the material inlet 212 around a first rotating shaft. The trigger connecting rod 220 includes a first end extending out of the material inlet 212 and a second end opposite to the first end. The second end of the trigger connecting rod 220 is located in the material bin 210. The material blocking plate 230 may be pivotably arranged in the material bin 210 around a second rotating shaft 231. The material blocking plate 230 includes a first end, which may be pivotably connected to the second rotating shaft 231, and a second end opposite to the first end.

The trigger connecting rod 220 is configured such that when a printing head 100 of the 3D printer pushes the first end of the trigger connecting rod 220 to enable the trigger connecting rod 220 to pivot around the first rotating shaft, the second end of the trigger connecting rod 220 moves towards the material blocking plate 230 to push the material blocking plate 230 to pivot around the second rotating shaft 231, and when the printing head 100 of the 3D printer pushes the first end of the trigger connecting rod 220 to a preset position, the second end of the trigger connecting rod 220 pushes the material blocking plate 230 to pivot around the second rotating shaft 231 to be in an operating state. In the operating state, the second end of the material blocking plate 230 abuts against an inner wall surface of the material bin 210 to block the waste materials 300 from the nozzle 110 of the 3D printer from falling. In other words, when the first end of the trigger connecting rod 220 is in the preset position, the second end of the material blocking plate 230 just abuts against the inner wall surface of the material bin 210.

The material bin 210 may be fixed around a print table of the 3D printer, and the material bin 210 may be arranged proximal to the print table. In this case, the material bin 210 may not occupy the print table. When different types or colors of printing materials of the 3D printer are replaced, the printing head 100 may move above the material inlet 212 of the material bin 210 near the print table, and the nozzle 110 of the printing head 100 is aligned with the material inlet 212 and ejects the waste materials 300, such that the waste materials 300 are ejected into the material bin 210 and discharged out of the 3D printer.

It can be understood that both the trigger connecting rod 220 and the material blocking plate 230 have a free state and the operating state. As shown in FIGs. 2 and 3, when the first end of the trigger connecting rod 220 is not subjected to an acting force applied by the printing head 100, the trigger connecting rod 220 is in the free state. In this case, the first end of the trigger connecting rod 220 extends out of the cavity 211, and the second end of the trigger connecting rod 220 extends into the material bin 210 and is not in contact with the material blocking plate 230. In this case, the material blocking plate 230 is also correspondingly in the free state, and the waste materials 300 entering into the cavity 211 from the material inlet 212 can flow to the material outlet 213 along the material discharge channel. As shown in FIGs. 4 and 5, when the first end of the trigger connecting rod 220 moves to the preset position under the push of the printing head 100, the trigger connecting rod 220 is in the operating state. In this case, the material blocking plate 230 is also correspondingly in the operating state, and the material blocking plate 230 can block the waste materials 300 entering into the cavity 211 from the material inlet 212 from flowing to the material outlet 213.

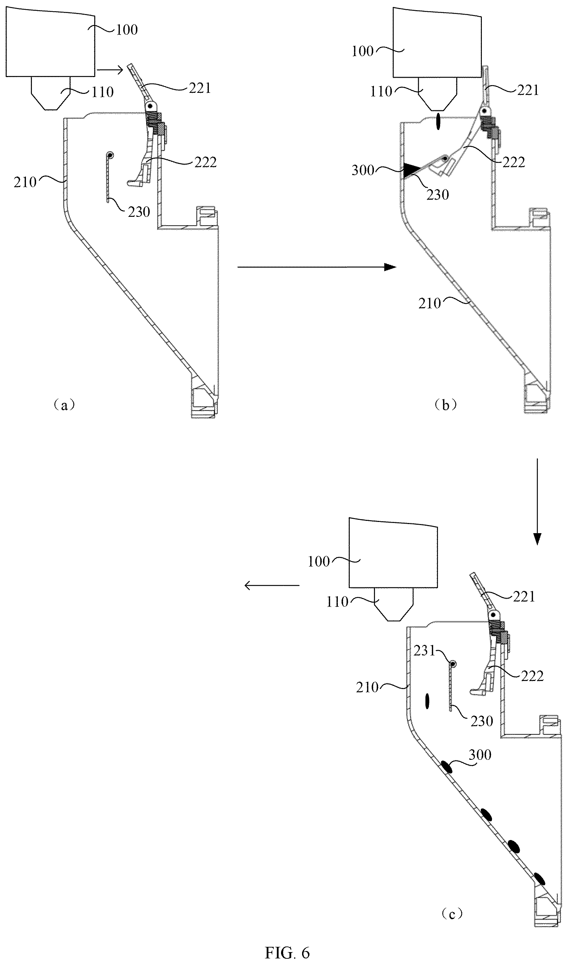

FIG. 6 schematically shows a schematic diagram of an operation process of the waste material discharge device 200 according to an embodiment of the present disclosure. An illustrative operation process of the waste material discharge device 200 is described below with reference to FIG. 6.

As shown in FIG. 6(a), the printing head 100 of the 3D printer moves directly above the material bin 210, and the nozzle 110 of the printing head 100 is aligned with the material inlet 212 of the material bin 210.

The printing head 100 moves to be in contact with the first end of the trigger connecting rod 220. When the printing head 100 continues to move, an acting force is applied to the first end of the trigger connecting rod 220 such that the first end of the trigger connecting rod 220 is pushed, the trigger connecting rod 220 rotates around the first rotating shaft, and then the second end of the trigger connecting rod 220 moves towards the material blocking plate 230 to push the material blocking plate 230 to rotate around the second rotating shaft 231.

As shown in FIG. 6(b), the printing head 100 continues to move until the first end of the trigger connecting rod 220 is pushed to the preset position. Then the second end of the trigger connecting rod 220 pushes the material blocking plate 230 to rotate to be in the operating state, and the second end of the material blocking plate 230 abuts against the inner wall surface of the material bin 210.

The nozzle 110 of the printing head 100 ejects the waste materials 300, the waste materials 300 fall into the cavity 211 by passing through the material inlet 212, and due to the blocking of the material blocking plate 230, the waste materials 300 cannot continuously flow to the material outlet 213 along the material discharge channel but fall onto the material blocking plate 230 until the waste materials 300 are ejected into the material bin 210 completely. In this case, a part of the waste materials 300 falling onto the material blocking plate 230 can gather into lumps conveniently rather than flowing around, thereby facilitating collection and disposal.

As shown in FIG. 6(c), the printing head 100 moves towards a direction away from the first end of the trigger connecting rod 220, and the printing head 100 stops pushing the first end of the trigger connecting rod 220. The material blocking plate 230 can rotate back around the second rotating shaft 231 under the action of gravity. At the same time, the material blocking plate 230 pushes the second end of the trigger connecting rod 220, such that the trigger connecting rod 220 rotates back around the first rotating shaft. When the material blocking plate 230 rotates back to be in the free state, the trigger connecting rod 220 also rotates back to be in the free state. In this case, the material blocking plate 230 stops blocking the waste materials 300, and the waste materials 300 gathering into lumps slide down to the material outlet 213 along the material discharge channel and are finally discharged from the material outlet 213 to the outside of the 3D printer.

In conclusion, the waste material discharge device 200 according to the embodiments of the present disclosure can discharge the waste materials 300 ejected by the 3D printer out of the 3D printer to avoid the waste materials 300 occupying the printing region of the print table, thereby solving a problem of the decreased area of the printing region as the print table is occupied by the waste materials 300.

Moreover, the waste material discharge device 200 is provided with the trigger connecting rod and the material blocking plate 230, such that the material blocking plate 230 in the operating state can block the waste materials 300 from falling. In this case, the waste materials 300 first fall onto the material blocking plate 230, a part of the waste materials 300 can gather into lumps, and thus the loosening degree of the waste materials 300 is reduced, such that the volume of the waste materials 300 is reduced, and therefore, such waste materials 300 are easily collected for disposal after being discharged from the material outlet 213 out of the 3D printer. It should be understood that compared to the waste materials 300 in a loosening state, the waste materials 300 in lumps are not easy to stick to the inner wall surface of the material bin 210, and then the probability of blockage of the material bin 210 due to the waste materials 300 accumulating on the inner wall surface can be reduced and the cleaning and maintenance frequency of the 3D printer can be reduced.

With further reference to FIGs. 5 and 6, when the material blocking plate 230 rotates to be in the operating state, a height of the second end of the material blocking plate 230 may be lower than a height of the first end of the material blocking plate 230. In this case, the first end to the second end of the material blocking plate 230 in the operating state extends obliquely downward, and the material blocking plate 230 is inclined to the inner wall surface of the material bin 210.

With such a design, the material blocking plate 230 can play a diversion role. When the waste material discharge device 200 is in operation, the waste materials 300 falling onto the material blocking plate 230 slide obliquely downward along the material blocking plate 230 to an included-angle space enclosed by the material blocking plate 230 and a material cylinder, such that the waste materials 300 accumulate together as much as possible to form lumps. The volume of the waste materials 300 in lumps is relatively small, which further contributes to reducing the loosening degree of the waste materials 300 and improving the easiness of collecting the waste materials 300. It should also be noted that compared to the waste materials 300 in a loosening state, the waste materials 300 accumulating into lumps are easier to slide out of the 3D printer along the material discharge channel, and thus the probability of the waste materials 300 sticking to the inner wall surface of the material bin 210 is reduced as much as possible.

With further reference to FIGs. 3 and 5, the trigger connecting rod 220 may include a first segment 221 and a second segment 222. The first segment 221 extends from the first rotating shaft to the first end of the trigger connecting rod 220, and the second segment 222 extends from the first rotating shaft to the second end of the trigger connecting rod 220. The first segment 221 extends out of the material bin 210 and beyond the material inlet 212 to receive the push of the printing head 100, and the second segment 222 extends into the material bin 210 and is capable of rotating to push the material blocking plate 230 to move. The trigger connecting rod 220 may be an integrated structure, and in this case, the first segment 221 and the second segment 222 are an integrated part manufactured by an integrated molding process, or the trigger connecting rod 220 may also be a separated structure. Through the configuration that the trigger connecting rod 220 includes the first segment 221 and the second segment 222, it is ensured that the trigger connecting rod 220 can push the material blocking plate 230 to rotate while being capable of receiving the push of the printing head 100.

In one possible embodiment, as shown in FIGs. 3 and 5, the first segment 221 and the second segment 222 may form an included angle θ, such that when the trigger connecting rod 220 is not pushed by the printing head 100 and thus in the free state, the first segment 221 is inclined towards the material inlet 212. The value range of the included angle θ is 0 degrees < θ < 180 degrees. For example, the included angle θ may be 30 degrees, 45 degrees, 60 degrees, 90 degrees, and the like. In this case, the included angle θ is designed reasonably, such that when the trigger connecting rod 220 is in the free state, the first segment 221 is inclined towards the material inlet 212, and the second segment 222 can extend vertically and be proximal to the inner wall surface of the material cylinder, and when the trigger connecting rod 220 is in the free state, the space occupied by the second segment 222 in a longitudinal direction of the material bin 210 is small.

In another possible embodiment, the first segment 221 and the second segment 222 of the trigger connecting rod 220 are at 180 degrees to each other. In this example, when the trigger connecting rod 220 is in the free state, the trigger connecting rod 220 may extend in a vertical direction, and the space occupied by the second segment 222 in a longitudinal direction of the material bin 210 is small.

In this case, in contrast, in the embodiment in which the first segment 221 and the second segment 222 may form an included angle θ, the printing head 100 can more easily abut against the first end of the trigger connecting rod 220 and easily push the trigger connecting rod 220 to move.

In the example shown in FIGs. 3 and 5, the second end of the trigger connecting rod 220 is provided with a protrusion portion 223 protruding towards the material blocking plate 230. In this example, when the waste material discharge device 200 is in operation and the printing head 100 pushes the first end of the trigger connecting rod 220 to enable the trigger connecting rod 220 to rotate around the first rotating shaft, the second end of the trigger connecting rod 220 moves towards the material blocking plate 230, and the protrusion portion 223 abuts against the material blocking plate 230 and pushes the material blocking plate 230 to move around the second rotating shaft 231. Through the design of the protrusion portion 223, the protrusion portion 223 easily touches the material blocking plate 230 and pushes the material blocking plate 230 to rotate. The protrusion portion 223 is not limited to a columnar structure, and may be a blocky structure or other shaped structures.

In an example, an axis of the first rotating shaft may be parallel to an axis of the second rotating shaft 231. For example, in the example shown in FIG. 5, the axis of the first rotating shaft and the axis of the second rotating shaft 231 may both extend in a Y-axis direction, and in this case, the first rotating shaft and the second rotating shaft 231 may both extend in a direction parallel to the horizontal plane. As an alternative embodiment, the axis of the first rotating shaft may also be perpendicular to the axis of the second rotating shaft 231. For example, the axis of the first rotating shaft may extend in the Y-axis direction, and the axis of the second rotating shaft 231 may extend in an X-axis direction.

In the above embodiments, the material bin 210 may further be designed to include a first material cylinder 214 and a second material cylinder 215. A first end of the first material cylinder 214 is the material inlet 212 and a second end of the first material cylinder 214 is connected to a first end of the second material cylinder 215. A second end of the second material cylinder 215 is the material outlet 213, and the first end to the second end of the first material cylinder 214 and the first end to the second end of the second material cylinder 215 both extend from above to below. With such a configuration, the first material cylinder 214 and the second material cylinder 215 constituting the material bin 210 both extend from above to below, and in this case, the waste materials 300 entering the cavity 211 from the material inlet 212 can easily slide out of the 3D printer along the material discharge channel under the action of self-gravity, without providing an additional driving device (such as a negative pressure pump) to drive the waste materials 300 to be discharged out of the 3D printer.

In some embodiments, a central axis of the first material cylinder 214 may extend in the vertical direction. In this case, after the waste materials 300 fall into the material inlet 212, the waste materials 300 can slide quickly to the second material cylinder 215 under the action of self-gravity, thereby increasing the disposal rate of the waste materials 300. Here, a cross-sectional shape of the first material cylinder 214 in an XY plane is not limited to the square shown in FIG. 1, and may be other shapes such as a circle and an ellipse. In an example, the first material cylinder 214 may also be designed in a way that the central axis thereof extends obliquely downward.

In some embodiments, a central axis of the second material cylinder 215 may extend obliquely downward such that a bottom wall of the second material cylinder 215 is inclined relative to the vertical direction. The bottom wall of the second material cylinder 215 being inclined relative to the vertical direction means that an extending direction of the bottom wall of the second material cylinder 215 forms a certain included angle with the vertical direction. With such a design, the bottom wall of the second material cylinder 215 can play a diversion role, such that the waste materials 300 entering the first end of the second material cylinder 215 can quickly slide out of the 3D printer along the bottom wall of the second material cylinder 215, thereby increasing the disposal rate of the waste materials 300.

In the example shown in FIG. 5, a cross-sectional shape of the second material cylinder 215 in a YZ plane may be a square, and in this case, an opening size of the material outlet 213 of the second material cylinder 215 is larger than an opening size of the first end of the second material cylinder 215, such that the material outlet 213 is larger to facilitate the discharge of the waste materials 300. In other embodiments, the cross-sectional shape of the second material cylinder 215 in the YZ plane may be other shapes such as a circle.

Moreover, the material bin 210 may be made of self-lubricating plastics. As self-lubricating plastics are not easy to stick, in the process that the waste materials 300 are discharged from the material bin 210 to the outside of the 3D printer, the waste materials 300 are not easy to stick to the inner wall surface of the material bin 210, and the waste materials 300 are not easy to accumulate on the inner wall surface of the material bin 210, thereby contributing to reducing the possibility of blockage of the material bin 210 due to the waste materials 300 accumulating on the inner wall surface. Further, the need for cleaning and maintenance of the material bin 210 can be reduced. In an example, the self-lubricating plastics may be referred to as, for example, polytetrafluoroethylene (PTFE), i.e., the material bin 210 may be made of polytetrafluoroethylene.

In other embodiments, the inner wall surface of the material bin 210 may further be provided with an anti-sticking coating. In this case, in the process that the waste materials 300 are discharged from the material bin 210 to the outside of the 3D printer, the waste materials 300 are not easy to stick to the inner wall surface of the material bin 210, and the waste materials 300 are not easy to accumulate on the inner wall surface of the material bin 210, thereby contributing to reducing the possibility of blockage of the material bin 210 due to the waste materials 300 accumulating on the inner wall surface. Further, the need for cleaning and maintenance of the material bin 210 can be reduced. The anti-sticking coating may be made of self-lubricating plastics, or the anti-sticking coating may be made of ceramic materials, which is not limited in this embodiment.

It should be understood that in the present specification, terms such as "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", and other directional or positional or dimensional indications are based on the direction or position or dimension shown in the accompanying drawings. These terms are used merely to facilitate the description rather than indicate or imply that the indicated device or element must have a specific direction or be constructed and operated in a specific direction, and therefore should not be construed as limiting the protection scope of the present disclosure.

In addition, the terms "first", "second" and "third" are only for the purpose of description, and may not be construed as indicating or implying the relative importance or implicitly indicating the number of technical features denoted. Thus, features defined by "first", "second" and "third" may explicitly or implicitly include one or more of the features. In the description of the present disclosure, "plurality" refers to two or more, unless otherwise explicitly and specifically defined.

In the present disclosure, unless otherwise clearly specified and defined, the terms "mount", "link", "connect", "fix" and the like should be comprehended in their broad sense. For example, "connect" may be "fixedly connect", "detachably connect" or "integrally connected as one"; "mechanically connect", "electrically connect" or "communicate"; "directly interconnect" or "indirectly interconnect through an intermediate"; or "the communication between the interiors of two elements" or "the interaction between two elements". For those of ordinary skill in the art, the specific meanings of the above terms in the present disclosure can be construed according to specific situations.

Unless otherwise explicitly stated or defined herein, the recitation of a first feature "on" or "under" a second feature may include the recitation of the first and second features being in direct contact, and may also include the recitation that the first and second features are not in direct contact, but are in contact via another feature therebetween. Moreover, a first feature "on", "above" and "over" a second feature includes a first feature being directly above and obliquely above a second feature, or simply indicates that the horizontal height of a first feature is higher than that of a second feature. A first feature "beneath", "under" and "below" a second feature includes a first feature being directly under and obliquely under a second feature, or simply indicates that the horizontal height of a first feature is smaller than that of a second feature.

The present specification provides a number of different embodiments or examples used to implement the present disclosure. It should be understood that these various embodiments or examples are purely illustrative and are not intended to limit the protection scope of the present disclosure in any way.

### Reference numerals:

100-printing head; 110-nozzle;
200-waste material discharge device;
210-material bin; 211-cavity; 212-material inlet; 213-material outlet; 214-first material cylinder; 215-second material cylinder;
220-trigger connecting rod; 221-first segment; 222-second segment; 223-protrusion portion;
230-material blocking plate; 231-second rotating shaft; and
300-waste material.

## Claims

1. A waste material discharge device for a 3D printer, comprising:
a material bin, wherein a cavity is formed in the material bin, a material inlet and a material outlet are formed in the material bin, the material inlet, the cavity, and the material outlet are sequentially communicated to form a material discharge channel, the material inlet is used for the entry of waste materials of a 3D printer, and the material outlet is configured to communicate with an outside of the 3D printer to enable the waste materials to be discharged to the outside of the 3D printer along the material discharge channel;
a trigger connecting rod, wherein the trigger connecting rod is pivotably arranged at the material inlet around a first rotating shaft and comprises a first end extending out of the material inlet and and a second end opposite to the first end, and the second end is located in the material bin; and
a material blocking plate, wherein when the first end of the trigger connecting rod moves to the preset position under the push of the printing head, the trigger connecting rod is in the operating state, in this case, the material blocking plate is also correspondingly in the operating state, and the material blocking plate can block the waste materials entering into the cavity from the material inlet from flowing to the material outlet; and
a material blocking plate, which may be pivotably arranged in the material bin around a second rotating shaft and includes a first end, which may be pivotably connected to the second rotating shaft, and a second end opposite to the first end.

2. The waste material discharge device according to claim 1, wherein the trigger connecting rod is configured such that when a printing head of the 3D printer pushes the first end of the trigger connecting rod to enable the trigger connecting rod to pivot around the first rotating shaft, the second end of the trigger connecting rod moves towards the material blocking plate to push the material blocking plate to pivot around the second rotating shaft, and when the printing head of the 3D printer pushes the first end of the trigger connecting rod to a preset position, the second end of the trigger connecting rod pushes the material blocking plate to pivot around the second rotating shaft to be in an operating state, and in the operating state, the second end of the material blocking plate abuts against an inner wall surface of the material bin to block the waste materials from a nozzle of the 3D printer from falling.

3. The waste material discharge device according to claim 2, wherein, in the operating state, a height of the second end of the material blocking plate is lower than a height of the first end of the material blocking plate.

4. The waste material discharge device according to any one of claims 1 - 3, wherein the trigger connecting rod includes a first segment extending from the first rotating shaft to the first end of the trigger connecting rod and a second segment extending from the first rotating shaft to the second end of the trigger connecting rod.

5. The waste material discharge device according to claim 4, wherein the first segment and the second segment of the trigger connecting rod form an included angle, such that the first segment is inclined towards the material inlet when the trigger connecting rod is not pushed by the printing head and thus in a free state, or the first segment and the second segment of the trigger connecting rod are at 180 degrees to each other.

6. The waste material discharge device according to any one of claims 1 - 5, wherein the second end of the trigger connecting rod is provided with a protrusion portion protruding towards the material blocking plate.

7. The waste material discharge device according to any one of claims 1 - 6, an axis of the first rotating shaft is parallel to an axis of the second rotating shaft, or the axis of the first rotating shaft is perpendicular to the axis of the second rotating shaft.

8. The waste material discharge device according to any one of claims 1 - 7, wherein the material bin comprises a first material cylinder and a second material cylinder, a first end of the first material cylinder is the material inlet, a second end of the first material cylinder is connected to a first end of the second material cylinder, a second end of the second material cylinder is the material outlet, and the first end to the second end of the first material cylinder and the first end to the second end of the second material cylinder both extend from above to below.

9. The waste material discharge device according to claim 8, wherein a central axis of the first material cylinder extends in a vertical direction; and/or, a central axis of the second material cylinder extends obliquely downward, such that a bottom wall of the second material cylinder is inclined relative to the vertical direction.

10. The waste material discharge device according to any one of claims 1 - 9, wherein the material bin is made of self-lubricating plastics, or an anti-sticking coating is arranged on the inner wall surface of the material bin.

11. The waste material discharge device according to claim 2, wherein in the operating state, the printing head is located above the material bin, and the nozzle of the printing head is aligned with the material inlet.

12. A 3D printer, wherein the 3D printer comprises the waste material discharge device according to any one of claims 1 - 11.
